# EUROPÄISCHE PATENTSCHRIFT

(11) **EP 2 809 496 B1**
(45) Veröffentlichungstag und Bekanntmachung des Hinweises auf die Patenterteilung: **16.06.2021**
(21) Anmeldenummer: 12779045.9
(22) Anmeldetag: 25.10.2012
(51) Int. Cl.: B29C 55/06

(54) **RECKWERK UND VERFAHREN ZUM LÄNGEN EINER FOLIENBAHN**
STRETCHING DEVICE AND METHOD FOR ELONGATING A FILM WEB
BANC D'ÉTIRAGE ET PROCÉDÉ D'ALLONGEMENT D'UNE BANDE CONTINUE DE FILM

(30) Priorität: 03.11.2011 DE 102011085735
(43) Veröffentlichungstag der Anmeldung: 10.12.2014
(73) Patentinhaber: Windmöller & Hölscher KG, 49525 Lengerich (DE)
(72) Erfinder: BACKMANN, Martin, 49525 Lengerich (DE); LINKIES, Jürgen, 49536 Lienen (DE); RÜBBELKE, Ingo, 59590 Geseke (DE); BUSSMANN, Markus, 45147 Essen (DE)
(74) Vertreter: Schneider, Bernd
(86) Internationale Anmeldenummer: PCT/EP2012/071160
(87) Internationale Veröffentlichungsnummer: WO 2013/064422

(56) Entgegenhaltungen:
- EP-A2- 0 715 943
- WO-A1-2006/130142
- GB-A- 1 419 972
- US-A- 3 161 711
- US-A- 3 165 499

## Beschreibung

Die Erfindung betrifft ein Reckwerk und ein Verfahren zum Längen von Folienbahnen. Mit Vorrichtungen dieser Art werden Folien gelängt. Das Wort Längen steht in diesem Zusammenhang für Recken oder Verstrecken von Folienbahnen. Zu diesem Zweck sind verschiedene Typen von Reckwerken bekannt geworden. Die in Zusammenhang mit der vorliegenden Druckschrift in Rede stehenden Reckwerke zeichnen sich durch eine Mehrzahl von Walzen aus, über die die zu längenden Folienbahnen geführt werden. Die Folienbahnen werden hierbei sowohl über einzelne Leitwalzen als auch durch Walzenspalte hindurchgeführt. Ein Teil dieser Walzen bildet so genannte Reckspalten. In diesen Reckspalten wird die Folienbahn gelängt, indem sich die Umfangsflächen aufeinander folgender Walzen mit in Folientransportrichtung zunehmender Geschwindigkeit bewegen. Die Druckschriften DE 10 2009 046 592 A1 und DE 10 2009 046 593 A1 zeigen Vorrichtungen dieser Art. Bei den dort gezeigten Vorrichtungen ist besonders auffällig, dass die Längung lediglich entlang der Längsrichtung der Folienbahnen stattfindet (monoaxiale Reckung oder Verstreckung). Die Längsrichtung der Folienbahnen fällt bei diesen Vorrichtungen mit der Transportrichtung derselben zusammen. Das Ergebnis einer Behandlung mit den genannten Vorrichtungen sind Folienbahnen, die in ihrer Längsrichtung an Länge gewinnen. Durch den Längungsprozess werden bei vielen Kunststoffen, insbesondere bei Polyalkylen, mechanische Eigenschaften der Folienbahnen verbessert. Zu diesen Eigenschaften gehört in erster Linie die Zugfestigkeit der Folienbahnen in der Richtung ihrer Längung. Bei dieser Verfahrensweise ist jedoch nachteilig, dass die Folienbahnen in den Raumrichtungen quer zu der Längungsrichtung nicht an Stabilität oder Zugfestigkeit gewinnen. Neben diesen bekannten und erwünschten Resultaten der Reck- oder Verstreckprozesse, die dem Kunststofftechniker bestens bekannt sind, werden insbesondere durch die Längung breiter Folienbahnen so genannte Neck-in-Prozesse ausgelöst. Ein Neck-in-Prozess führt dazu, dass die gelängte Folie am Rande der Folienbahnen dicker ist als in deren Mitte. Dieser Zustand ist unerwünscht. Aus diesem Grund schlägt die Druckschrift EP 2 277 681 A1 vor, das Profil der Folie bereits während der Folienproduktion so zu gestalten, dass die Abschnitte der Breite der Folienbahn, die später an den Rändern der gelängten Folienbahnen liegen, deutlich dünner hergestellt werden. Auf diese Weise soll den negativen Konsequenzen des Neck-in (dicke Folienränder) entgegen gewirkt werden. Zu den Nachteilen des vorgestellten Prozesses gehört, dass er in Bezug auf eine Blasfolienanlage vorgeschlagen wird. Bei einer solchen Blasfolienanlage wird zunächst ein Folienschlauch aus einer Ringsspaltdüse extrudiert. Normalerweise wird das Profil des Blasfolienschlauchs auf eine optimierte, über den Umfang des Folienschlauches konstante Dicke optimiert. Zum Zwecke der Regelung des Dickenprofils des Blasfolienschlauchs werden oft geregelte Kühlringe eingesetzt. Bei dem in der oben genannten Druckschrift vorgestellten Verfahren ist es nötig, an der Stelle des Schlauchumfanges, an der der Folienschlauch mit einem Messer aufgetrennt wird, bereits bei der Extrusion des Folienschlauches eine Dünnstelle herbeizuführen. Eine solche Dünnstelle soll gemäß der oben genannten Druckschrift herbeigeführt werden, indem der geregelte Kühlring der Blasfolienanlage im Bereich der späteren Dünnstelle eine höhere Temperatur herbeiführt als in den übrigen Bereichen des Folienschlauchumfanges. Diese Maßnahme erfordert jedoch eine große Heizleistung im Bereich der Dünnstelle und/oder eine dementsprechend große Kühlleistung in den übrigen Bereichen.

Damit erfordern die aufgelisteten Maßnahmen stärkere Kühl- oder Heizeinrichtungen als normalerweise in Blasfolienanlage verwendet werden. Darüber hinaus ist das Einprägen einer Dünnstelle durch eine erneute Wärmezufuhr in eine immer noch heiße Folienschmelze, die in der Folge wieder gekühlt werden muss, verfahrenstechnisch nachteilig.

Die US 3 161 711 offenbart eine Vorrichtung zur Herstellung und Längsstreckung der Folie. Nachdem die Folie in einem Streckwerk gestreckt wurde, wird ihre Dicke in Querrichtung gemessen. Das Messsignal wird verwendet, um einem vor dem Streckwerk angeordneten elektrischen Heizer anzusteuern, um so Einfluss auf das Folienprofil quer zur Transportrichtung der Folie zu nehmen.

Es besteht die Aufgabe der vorliegenden Erfindung darin, eine Einrichtung und ein Verfahren vorzuschlagen, mit welchen sich die Dicke der Folienbahn gut vergleichmäßigen lässt.

Diese Aufgabe wird durch die Ansprüche 1 und 12 gelöst.

Die Erfindung lehrt demzufolge, dass stromabwärts der Walzen eine Sensorvorrichtung vorgesehen ist, mit welcher die Foliendicke der Folienbahn kontrollierbar ist, wobei eine Steuervorrichtung vorgesehen ist, welcher die Messergebnisse der Sensorvorrichtung über eine Signalleitungen mitteilbar sind, wobei mit der Steuervorrichtung über Signalleitungen Steuerbefehle an die Mittel zum Beaufschlagen der Folienbahn mit einem Temperaturgradienten weitergebbar sind, wobei die Mittel zum Beaufschlagen der Folienbahn mit einem Temperaturgradienten eines der folgenden Mittel umfassen:
- Infrarotstrahler, welche entlang der axialen Richtung, die in die Breite der Folienbahn verläuft, segmentiert sind,
- Magnetfelderzeuger, mit welchen in segmentierten Walzen Wirbelströme erzeugbar sind,
- Heizwalzen,
- Heißluftdüsen, mit welchen Luft unterschiedlicher Temperatur und/oder unterschiedlicher Luftvolumina in der Richtung quer zur Längsachse der Folienbahn einprägbar ist.

Damit ist es möglich, effizientere weil direkter wirkende Mittel zum Übertragen von Temperatur in dem Reckwerk einzusetzen. Ein zusätzlicher Temperatureintrag oder eine zusätzliche Kühlung erfolgt in der Blasfolienanlage in der Regel mit Hilfe von Luft. Diese Luft wird in der Blasfolienanlage direkt nach der Extrusion der Folienschmelze ohnehin gebraucht, um die Schmelze oder die noch heiße Folie zu kühlen. Weitere, von dem Ziel der Produktion einer mit einem gleichmäßigen dicken Profil versehenen Folie, abweichende Kühl- oder Heizmaßnahmen müssen in der Blasfolienanlage selber zu verfahrenstechnischen Komplikationen führen. Überdies wird die Stellkraft bzw. der Stellbetrag der Foliendickenregelung für das Einprägen eines ungleichmäßigen Foliendickenprofils verbraucht, wenn die Lehre der EP 2 277 681 A1 zur Anwendung kommt. Eine Verlagerung einer wie auch immer gearteten Temperaturbehandlung in das Reckwerk, wie es die vorliegende Erfindung vorsieht, vermeidet diese Probleme. Wenn das in Rede stehende Reckwerk tatsächlich zum Recken von Folienbahnen verwendet wird, d. h., wenn die zu reckende Folie nach ihrer Extrusion bereits erkaltet ist, um dann gereckt zu werden, kann ein größerer Temperaturunterschied in der Folie erzeugt werden als in der gerade extrudierten Schmelze bzw. als in der gerade extrudierten Folie. Dies gilt natürlich auch für Folie, die in Flachfolienextrusionsanlagen hergestellt wird. Daher ist das erfindungsgemäße Reckwerk und das erfindungsgemäße Verfahren auch zum Weiterverarbeiten von Flachfolienbahnen vorteilhaft einsetzbar. Erfindungsgemäße Reckwerke können gerade extrudierte Flach- oder Blasfolie direkt längen, ohne dass die betreffende Folie stillsteht und/oder zum Beispiel auf eine Folienwickelhülse gespeichert wird. Neben einer solchen Inline-Weiterverarbeitung kommt natürlich auch eine Offline-Weiterverarbeitung in Frage, bei der die extrudierte Folie eine Zwischenspeicherung erfährt, bevor sie dem Reckwerk zugeführt wird.

Selbst wenn mit dem Reckwerk ein Verstreckvorgang durchgeführt werden soll, d. h. selbst wenn die Folie nach ihrer Produktion noch nicht völlig erkaltet ist, bevor sie erneut gelängt wird, ist die Empfindlichkeit der Folie und insbesondere der Folienoberfläche deutlich geringer als unmittelbar nach ihrer Extrusion. Wie bereits erwähnt findet der Längungsprozess in Reckspalten statt, die zwischen zumindest zwei mit unterschiedlicher Umfangsgeschwindigkeit betriebenen Walzen liegen. Die den Reckspalt begrenzenden Walzen sind in der Regel Bestandteil von Walzenpaaren, d. h., die Folie durcheilt vor und/oder nach Erreichen des Reckspalts einen Walzenspalt. Durch den Druck in dem Walzenspalt ist die Gefahr eines Rutschens der Folienbahnen auf der angetriebenen Walze geringer als bei einer einzelnen Walze. Als Folge wird die Bahn einer stärkeren und gleichmäßigeren Längskraft während des Reckprozesses ausgesetzt.

Es ist vorteilhaft, zumindest Teile der Mittel zum Beaufschlagen der Folienbahnen mit einem Temperaturgradienten entlang der Transportrichtung der Folienbahnen dem zumindest einen Reckspalt unmittelbar vorzulagern. Insbesondere, wenn das Einbringen des Temperaturgradienten mit einem erneuten Temperatureintrag einhergeht, sollte vermieden werden, dass die erneut aufgeheizte Folie mit ihrer empfindlicheren Oberfläche über eine Mehrzahl von Walzen geführt wird, bevor sie dem Zweck ihres Transports durch das Reckwerk, der Längung, zugeführt wird. Alternativ oder ergänzend können zumindest Teile der Mittel zum Beaufschlagen der Folienbahnen mit dem Temperaturgradienten in die Walzen des Reckwerks integriert werden. Die in dieser Art fortgebildeten Walzen können die Walzen sein, die Reckspalte begrenzen. Hierbei ist es vorteilhaft, wenn die in der Bahntransportrichtung erste Walze oder das erste Walzenpaar, das in Bahntransportrichtung einen Reckspalt begrenzt, in dieser Weise weitergebildet ist. Walzen, die im Zusammenhang mit der vorliegenden Erfindung vorteilhaft einsetzbar sind, können segmentiert sein. So kann die betreffende Walze eine gegebenenfalls gummierte Metalloberfläche aufweisen, wobei die Oberfläche in ringartige Metallsegmente unterteilt ist, zwischen denen Isolationselemente eingebracht sind oder schlicht ein Abstand besteht. Die erwähnten ringartigen Metallelemente können durch geeignete Heizelemente im Inneren der Walzen geheizt werden. Zu solchen Heizelementen gehören Heizpatronen.

Es kommt jedoch auch eine indirekte Heizung von Walzenbestandteilen mit Induktionsverfahren oder Strahlungsverfahren in Frage. In den verschiedenen Reckwerken sind oft unterschiedliche Temperiervorrichtungen vorhanden. Oft wird eine bereits völlig erkaltete Folienbahn erneut temperiert, was bedeuten kann, dass die Folienbahn mit Heizmitteln, zu denen auch heiße Ölbäder gehören können, auf eine Recktemperatur gebracht wird, die oft nur geringfügig unterhalb der Extrusionstemperatur liegt. Gerade im Zusammenhang mit solchen Reckwerken ist es vorteilhaft, wenn Teile der Bahnbreite bei der Anwendung des erfindungsgemäßen Verfahrens gekühlt werden. Eine Kühlung der Folienbahnen bietet sich insbesondere in dem in der Richtung der Folienbreite mittleren Bereich an. Zum Kühlen der Bahn kann Wasser zum Einsatz kommen. Es ist jedoch auch denkbar, segmentweise temperierbare Walzen mit Pelletierelementen auszustatten. Auch heiße oder kalte Luft stellt ein mögliches Temperierungsmittel dar. Hierbei kann die betreffende Temperierungsluft, beispielsweise unter Verwendung von Gebläsen und Düsen, gegen die Folienbahnen geblasen werden.

Bei einem erfindungsgemäßen Verfahren werden die Folienbahnen mit einem Temperaturgradienten versehen, der in der Richtung quer zur Längsachse der Folienbahnen verläuft. Diese Maßnahme wird ergriffen, während die Folienbahnen von den Walzen transportiert werden. Auf diese Weise findet das Verfahren in einem Reckwerk statt. Wie bereits erwähnt wird die Temperatur in den Außenbereichen der laufenden Folienbahnen in der Regel höher sein als in der Bahnmitte. Alternativ oder ergänzend zu den Maßnahmen, die die Temperatur der Bahn betreffen, können Maßnahmen ergriffen werden die mechanisch auf die Bahn einwirken. Zu diesen Maßnahmen gehört es, zumindest eine Walzen, die an der Bildung eines Walzenspalts beteiligt ist, derart zu einer anderen Walze zu positionieren, dass der Druck, der in dem Walzenspalt auf die Bahn ausgeübt wird, an zumindest einer Seite der Bahn höher ist als in den übrigen Bereichen der betreffenden Bahnbreite. Dies kann durch eine spezielle Formung des Querschnittes dieser Walze geschehen, es ist jedoch auch möglich, die Walzenachsen in einer von der Parallelität abweichenden Weise gegeneinander zu positionieren. Auf diese Weise kann zunächst eine und dann in einem weiteren Walzenspalt die andere Seite der Folienbahnen mit einem höheren Druck beaufschlägt werden.

Eine weitere Einwirkungsmöglichkeit besteht darin, die Reibung zwischen der Folienbahn und der Oberfläche von Walzen des Reckwerks in der axialen Richtung der Walzen zu variieren, also auch mit einem Gradienten zu versehen. Auch die Folienbahn selber kann entlang ihrer Breite mit unterschiedlichen Reibungseigenschaften versehen werden.

So können die Reibungseigenschaften von Walzenumfangsflächen über die axiale Länge der Walze variiert werden. Insbesondere wenn die Haftreibung zwischen der Folienbahn und den axialen Enden der Walzen höher ist als die betreffende Haftreibung in der Mitte der Walze bzw. der Folienbahn lassen sich Vorteile erzielen.

Eine weitere vorteilhafte Maßnahme besteht darin, Walzen zu verwenden, die insbesondere an ihren axialen Enden mit einer Oberfläche versehen sind, wie sie normalerweise bei Breitstreckwalzen Verwendung findet. Breitstreckwalzen sind derart geformt, dass sie der auf der Breitstreckwalze transportierten Folienbahn während des Kontaktes zwischen der Folienbahn und der Breitstreckwalze Kräfte vermitteln, die in die axiale Richtung der Breitstreckwalze bzw. in die Richtung quer zur Transportrichtung der Folienbahnen wirken.

Weitere Ausführungsbeispiele der Erfindung gehen aus der gegenständlichen Beschreibung und den Ansprüchen hervor.

Die einzelnen Figuren zeigen:
- Fig. 1: Eine Skizze eines Reckspalts
- Fig. 2: Den Querschnitt einer ungelängten Folie
- Fig. 3: Den Querschnitt einer gelängten Folie
- Fig. 4: Den gewünschten Querschnitt einer gelängten Folie
- Fig. 5: Ein Reckwerk nach dem Stand der Technik
- Fig. 6: Ein erfindungsgemäßes Reckwerk
- Fig. 7: Eine Verteilung der Folientemperatur über die Folienbreite

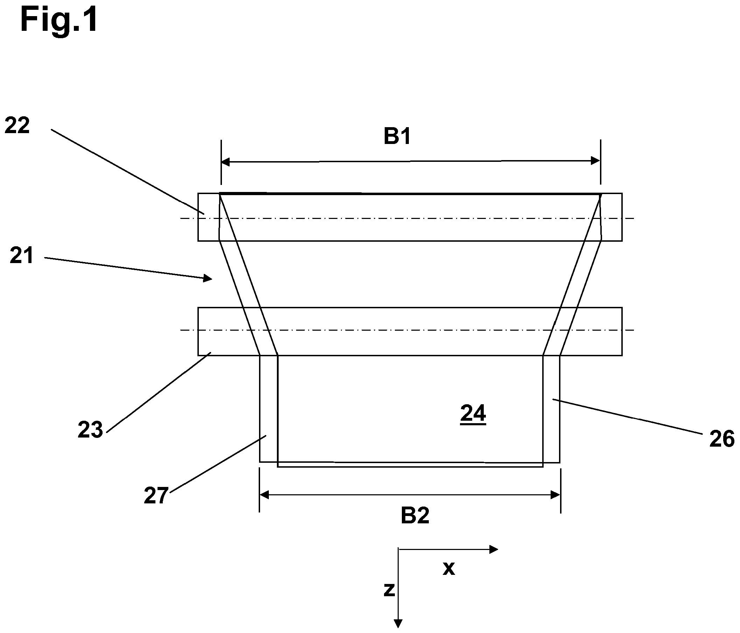

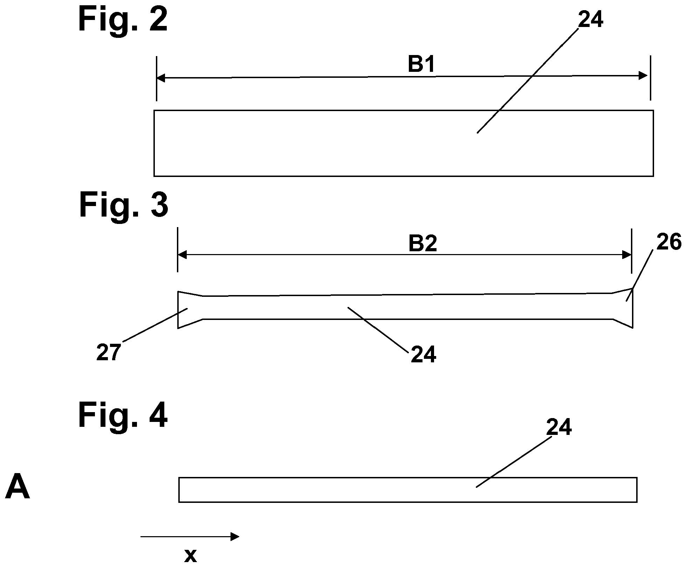

Fig. 1 zeigt eine Skizze eines Reckspalts 21, der von den Walzen 22 und 23 begrenzt wird. Die aus der Bildebene einlaufende Folienbahn 24 umschlingt zunächst die Walze 22, die eine erste Umfangsgeschwindigkeit besitzt. Die Folienbahn 24 durchquert dann den Reckspalt und erreicht schließlich die Oberfläche der Walze 23, die 23 eine Umfangsgeschwindigkeit aufweist, die höher ist als die Umfangsgeschwindigkeit der Walze 22. Aufgrund der Differenz der Umfangsgeschwindigkeiten wird die Bahn 24 in dem Reckspalt 21 gelängt. In Figur 1 ist zu sehen, dass sich die Breite der Folienbahnen 24 durch den angesprochenen Längungsprozess von der Breite B1 auf die Breite B2 verjüngt. Die Randbereiche 27 und 26 der Folienbahn 24 sind anders dargestellt als die Bereiche in der Mitte der Bahn 24, um den nachfolgend dargestellten Neck-in der Folie 24 zu zeigen. Die Figuren 2 - 4 zeigen unterschiedliche Folienprofile und tragen auf diese Weise zum Verständnis des Neck-in-Prozesses bei. Figur 2 zeigt das Profil einer neuen Folie 24 vor dem Recken. Figur 3 zeigt das Profil einer gelängten Folie 26, die in den Randbereichen 27 und 26 eine größere Folienstärke aufweist als in dem Mittelbereich. Figur 4 zeigt wieder ein Folienprofil gleichmäßiger Stärke und symbolisiert auf diese Weise ein Folienprofil, das sich der Folienhersteller auch von seiner gelängten Folie erhofft.

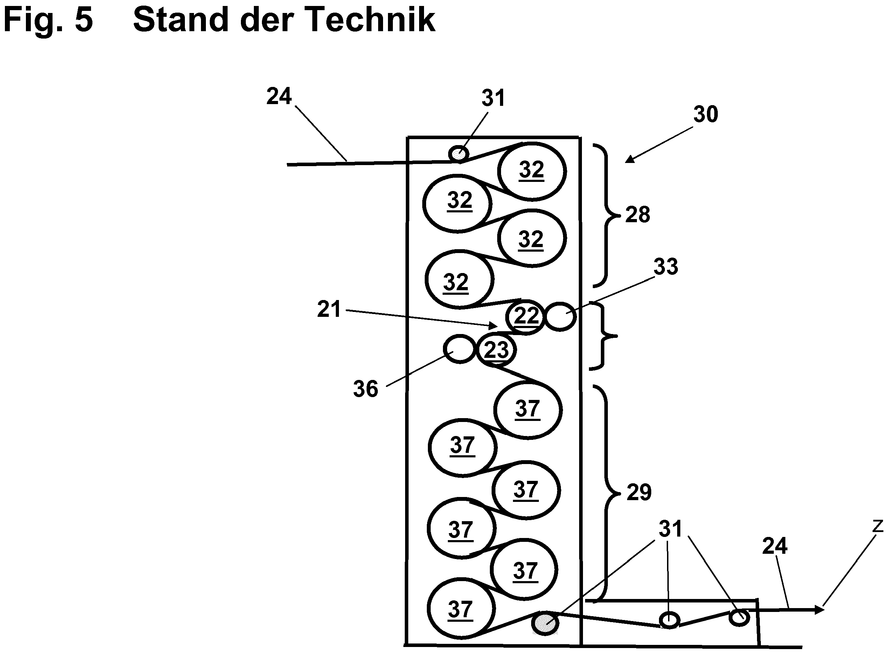

Figur 5 zeigt eine Funktionsskizze eines Reckwerks 30 des Standes der Technik. Die Folienbahnen 24 laufen entlang der Bahntransportrichtung z in das Reckwerk 30 ein. Hier wird es zunächst von der Leitwalze 31 zu den Heizwalzen 32 geführt, die jeweils mit dem Bezugszeichen 32 bezeichnet sind. Die Aufgabe der Heizwalzen 32 besteht darin, bereits völlig oder teilweise erkaltete Folienbahnen 24 wieder auf eine Temperatur zu bringen, die für einen Reck- oder Verstreckprozess ausreicht. Von Reckwerken des Standes der Technik werden in der Regel Reckprozesse ausgeführt, d. h. dass die Folie eben bereits erkaltet ist und wieder auf Recktemperatur gebracht werden muss. Verstreckprozesse, wie sie zum Beispiel bei der Blasfolienextrusion zum Tragen kommen, sind bei der Verwendung von Reckwerken eher selten anzutreffen, aber denkbar (insbesondere, wenn das Reckwerk inline einer Folienextrusionsanlage folgt).

Insbesondere, wenn einer Extrusionsanlage direkt ein erfindungsgemäßes Reckwerk nachgeordnet ist, d. h. wenn das Recken "in-line" geschieht, dürfte es möglich sein, von einem Verstreckprozess auch im Zusammenhang mit einem Reckwerk zu sprechen. Dies ist jedoch eher eine Definitions- als eine technische Frage.

Nachdem die Folienbahn 24 in dem Bereich der Heizwalzen 28 wieder auf eine Recktemperatur gebracht worden ist, läuft sie in den Bereich der Reckwalzen 22 und 33 ein und durchquert den Spalt zwischen diesen beiden Walzen 22, 33. Daraufhin durchläuft die Folienbahn 24 den Reckspalt 21, um dann die Oberfläche der Reckwalze 23 zu erreichen und den Reckspalt 21 zu verlassen. Diese Reckwalze 23 bildet wieder mit der Reckwalze 36 einen Walzenspalt. Durch die bereits erwähnte unterschiedliche Umfangsgeschwindigkeit des ersten Walzenpaares 22, 33 gegenüber dem zweiten Walzenpaar 23, 36 wird die Folienbahn 24 in dem Reckspalt 21 gelängt.

Die Folienbahn 24 erreicht dann den Bereich 29 der jeweils mit dem Bezugszeichen 37 bezeichneten Kühlwalzen, in dem die Folienbahn 24 wieder abgekühlt wird. Nach dem Verlassen dieses Bereichs 29 hat die Folienbahn 24 wieder eine etwas niedrigere Temperatur erreicht, so dass ihre Oberfläche den Transport über die Leitwalze 31 in der Transportrichtung z ohne weitere Schäden überstehen kann und schlussendlich beispielsweise einer nicht dargestellten Wickelstelle oder einer ebenfalls nicht dargestellten Weiterverarbeitungsmaschine zugeführt werden kann.

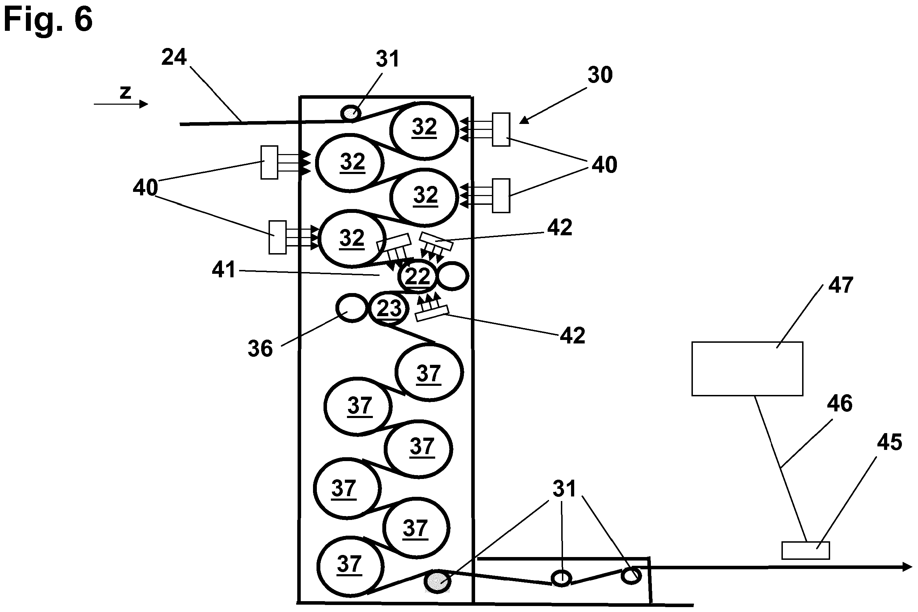

Die Figur 6 zeigt eine Funktionsskizze eines Reckwerks 30, das gemäß der erfindungsgemäßen Lehre weitergebildet worden ist. Die dem Fachmann bereits bekannten Funktionskomponenten dieses Reckwerks 30 wie die Heizwalzen 32 und die Kühlwalzen 37 sind mit denselben Bezugszeichen versehen wie die entsprechenden Funktionskomponenten des Reckwerks 30 in Figur 5. Zusätzlich zu diesen Funktionskomponenten sind jedoch verschiedene Mittel zum Beaufschlagen der Folienbahn 24 mit einem Temperaturgradienten in die Figur 6 eingezeichnet. Diese Mittel werden nachstehend beschrieben: Folgt man dem Weg der Folienbahn 24 durch das Reckwerk 30 in der Bahnlaufrichtung z, so fallen zunächst die Magnetfelderzeuger 40 auf, die in einer Arbeitsstellung zu den Heizwalzen 32 stehen. Mit diesen Magnetfelderzeugern 40 werden magnetische Wechselfelder erzeugt. Hierbei ist der Abstand, den diese Magnetfelderzeuger gegenüber der Walzenoberfläche einnehmen, geringer als er in Figur 6 erscheint. Durch das magnetische Wechselfeld werden unterhalb der Folienbahnen 24 und unterhalb der nicht dargestellten Gummierung der in ihrem Inneren aus Metall bestehenden Heizwalzen 32 Wirbelströme induziert, so dass sich die Walzenoberfläche erhitzt. Dieses Funktionsprinzip ist auch von Induktionsherden bekannt. Die Heizwalzen 32 des in Figur 6 dargestellten Reckwerks 30 sind in der axialen Richtung x der Walzen 32 segmentiert, und die betreffenden in axialer Richtung aufeinander abfolgenden Segmente sind thermisch und elektrisch voneinander getrennt.

Auch die Magnetfelderzeuger 40 sind in der axialen Richtung x der Walzen 32, die der Richtung x entspricht, in der die Breite der Folienbahnen 24 verläuft, segmentiert. Auf diese Weise ist es möglich, jedem axialen Segment einer Heizwalze 32 eine spezielle Wärmeenergie zuzuführen und auf diese Weise die Walzenoberfläche mit einem Temperaturgradienten zu versehen. Alternativ oder ergänzend zu dieser Art der Beheizung können die Heizwalzen 32 auch in ihrem Inneren mit weiteren Heizmitteln ausgestattet sein. Diese Heizmittel können wieder derart angeordnet und mit der Walzenoberfläche thermisch verbunden sein, dass sie einzelne axiale Walzensegmente individuell bevorzugt beheizen, oder sie können als gemeinsame Heizvorrichtung der jeweiligen Walze ausgebildet sein. In ersterem Fall würden diese zusätzlichen Heizmittel wieder als Mittel zum Beaufschlagen der Folienbahn 24 mit einem Temperaturgradienten gelten. In letzterem Fall wäre die Verwendung der Heizmittel nützlich, um alle Bereiche der Folienbahnbreite auf eine ausreichende Recktemperatur zu bringen.

Die nächsten Mittel zum Beaufschlagen der Folienbahnen mit einem Temperaturgradienten, die auf dem Wege der Folienbahn 24 durch das Reckwerk 30 in Folientransportrichtung z auffallen, sind die Infrarotstrahler 42. Auch die Infrarotstrahler 42 sind entlang der Richtung x segmentiert und können auf diese Weise einen Temperaturgradienten in die Folienbahn 42 einbringen. Der Einwirkbereich der Infrarotstrahler 42 ist in Bahnlaufrichtung dem Beginn des Reckspaltes 21 unmittelbar vorgelagert. Dies ist vorteilhaft. Es empfehlen sich Abstände zu dem Spalt zwischen den Walzen 22 und 33, die geringer als 40 cm sind. Noch vorteilhafter sind Abstände, die geringer als 30 oder 20 cm sind. Am Ausgang des Spaltes zwischen den Walzen 22 und 33 gerät die Folienbahn 42 in den Einflussbereich weiterer Infrarotstrahler 42. Über die Funktionsweise dieser Infrarotstrahler braucht nichts Ergänzendes gesagt zu werden. Vorteilhafterweise werden sie derart angeordnet, dass die Bahn beim Verlassen der Walze 22 im Einwirkbereich der Infrarotstrahler 42 liegt. Die nächsten Mittel zum Beaufschlagen der Folienbahn mit einem Temperaturgradienten, die auf dem Weg der Bahn 42 liegen, sind die Heißluftdüsen 41. Diese 41 zielen direkt auf die Folienbahn 24 auf ihrem Weg durch den Reckspalt 21. Durch die Extrusion von Luft unterschiedlicher Temperatur entlang der Breite x der Bahn 24 und oder durch die Extrusion unterschiedlicher Luftvolumina pro Längeneinheit der Bahnbreite kann ebenfalls ein Temperaturgradient in die Folienbahn 24 entlang ihrer Breite x eingeprägt werden.

Schließlich erreicht die Folienbahn 24 den Spalt zwischen den Walzen 36 und 23 und verlässt den Reckspalt 21. Sie 24 gelangt in den Bereich 29 der Kühlwalzen 37, der 29 in der Regel genauso gestaltet sein wird wie beim Stand der Technik. Es kann jedoch vorteilhaft sein, Bereiche der Folienbahn 24, die im Bereich der Heizwalzen 32 oder des Reckspalte 21 stärker erhitzt worden sind, stärker zu kühlen. Also ist es auch hier vorteilhaft, die Kühlleistung, mit der die Folienbahn 24 beaufschlagt wird, in axialen Segmenten der Walzen 37 bzw. entlang der Folienbreite unterschiedlich zu gestalten. Die restlichen Funktionskomponenten des Reckwerks 30 funktionieren genauso wie bereits in Bezug auf das Reckwerk 30 in Figur 5 beschrieben.

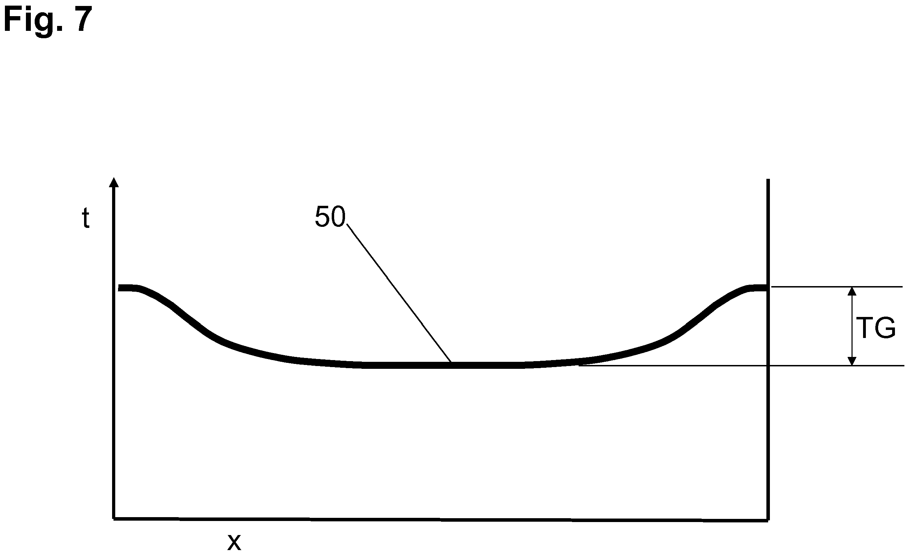

In Figur 7 ist ein vorteilhafter Verlauf 50 der Folientemperatur t entlang der Raumrichtung x der Folienbreite gezeigt. Ein solcher zu beiden Seiten der Folienbahn gleichmäßiger Verlauf der Folientemperatur T entlang der Richtung x der Folienbreite ist vor allem dann vorteilhaft, wenn die Vorrichtung seit längerer Zeit unter diesen Bedingungen arbeitet und befriedigende Ergebnisse erzielt. Wie die Ergebnisse der Steuerung der Foliendicke in dem Reckwerk 30 kontrolliert werden können, ist in Figur 6 gezeigt. Hier kontrolliert eine Sensorvorrichtung 45 die Foliendicke. Zur Kontrolle des foliendicken Profils gerade extrudierter Folie sind eine Reihe von Sensorverrichtungen bekannt. So existieren Kapazitäten für Sensoren, aber es ist auch möglich, die Transmission von Strahlung (zum Beispiel Infrarotstrahlung oder Betastrahlung) zu messen. Da die Folienbahn 24 im Messbereich der Sensorvorrichtung 45 flach liegt, bietet es sich an, eine Sensorvorrichtung zu verwenden, die entlang der Folienbreite traversiert. Die Sensorvorrichtung 45 kann ihre Messergebnisse über die Signalleitung 46 der Steuervorrichtung 47 mitteilen. Die Steuervorrichtung kann Bestandteil eines Maschinencomputers sein, der die verschiedensten Funktionskomponenten des Reckwerks 30 steuern kann. Auf diese Weise lässt sich, unter Verwendung der vorgenannten Funktionskomponenten 45, 46 und 47, eine Regelung der Foliendicke bzw. des Foliendickenprofils nach einem Sollwert durchführen. So kann die Steuervorrichtung 47 über nicht gezeigte Signalleitungen oder moderne Kommunikationsmittel wie WLAN-Netzwerke aufgrund des von der Sensorvorrichtung gemessenen Dickenprofils Steuerbefehle an die verschiedenen Mittel zum Erzeugen eines Temperaturgradienten weitergeben. Auf diese Weise kann die Steuervorrichtung zum Beispiel die Folientemperatur in einem Bereich der Folienbreite x erhöhen, wenn die Foliendicke einen Sollwert überschreitet. Im umgekehrten Fall kann die Steuervorrichtung die Heizleistung herabsetzen oder Steuerbefehle an Kühlelemente erteilen, um die Folientemperatur herabzusetzen. Ein weiterer Bestandteil der dargestellten computerimplementierbaren Regelungsverfahren kann in der Anpassung der Folientransportgeschwindigkeit durch das Reckwerk 30 bestehen.

So erscheint es vorteilhaft, die Folientransportgeschwindigkeit herabzusetzen, wenn die Abweichungen der Foliendicke von einem Sollwert einen Schwellwert überschreiten. Auf diese Weise kann den Mitteln zum Beaufschlagen der Folienbahn 24 mit einem Temperaturgradienten mehr Zeit zur Anpassung der Temperatur eingeräumt werden.

Es ist ebenfalls vorteilhaft, in einem solchen Fall das Reckverhältnis, das heißt das Verhältnis zwischen den Umfangsgeschwindigkeiten der den oder die Reckspalte 21 begrenzenden Walzen beizubehalten. Auf diese Weise ist es möglich, auch bei größeren Schwankungen der Foliendicke schnell zu reagieren, die Folienproduktion aufrechtzuerhalten und eine gute Folienqualität zu erreichen. Insbesondere in dem zuletzt beschriebenen Fall empfiehlt es sich, zwischen der Folienextrusionsanlage und einem erfindungsgemäßen Reckwerk 30 Bahnspeichervorrichtungen durchzuführen, wenn die Folienextrusionsanlage und das Reckwerk 30 im Inlinebetrieb betrieben werden sollen. Aus den vorstehend aufgeführten Tatsachen ergibt sich auch, dass sich die vorliegende Erfindung auch an Reckwerken 30 mit mehreren Reckspalten 21 vorteilhaft einsetzen lässt.

An dieser Stelle ist noch einmal zu erwähnen, dass es sich als vorteilhaft erwiesen hat, den Temperaturgradienten direkt in die Folienbahn einzubringen, während diese zwischen zwei Walzen transportiert wird. Besonders vorteilhaft ist hier eine derartige Temperaturbeaufschlagung im Reckspalt selber.

Eine weitere vorteilhafte Weiterbildungsmöglichkeit der Erfindung lässt sich durch die Verwendung von Walzen in dem Reckwerk erreichen, die auf ihrer Oberfläche mit einer Temperatur isolierenden Schicht versehen sind. Solche Walzen begrenzen vorteilhafterweise den Reckspalt, dort wo die Bahn in ihn einläuft.

| **Bezugszeichenliste** | |
|---|---|
| 1 | |
| 2 | Reckspalt |
| 3 | (In Bahnlaufrichtung erste) Walze, die den Reckspalt begrenzt |
| 4 | (In Bahnlaufrichtung zweite) Walze, die den Reckspalt begrenzt |
| 5 | Folienbahnen/Bahn |
| 6 | |
| 7 | Rechter Randbereich der Bahn |
| 8 | Linker Randbereich der Bahn |
| 9 | Bereich der Heizwalzen |
| 10 | Bereich der Kühlwalzen |
| 11 | Reckwerk |
| 12 | Leitwalze |
| 13 | Heizwalze |
| 14 | Reckwalze |
| 15 | |
| 16 | |
| 17 | Reckwalze |
| 18 | Kühlwalze |
| 19 | |
| 20 | |
| 21 | Magnetfelderzeuger |
| 22 | Heißluftdüse |
| 23 | Infrarotstrahler |
| 24 | |
| 25 | |
| 26 | Sensorvorrichtung |
| 27 | Signalleitung |
| 28 | Steuervorrichtung |
| 29 | |
| 30 | |
| 31 | Verlauf der Folientemperatur über die Folienbreite (Graph) |
| 32 | |
| 33 | |
| 34 | |
| 35 | |
| 36 | |
| 37 | |
| 38 | |
| 39 | |
| 40 | |
| 41 | |
| B1 | Breite der ungelängten Bahn |
| B2 | Breite der gelängten Bahn |
| z | Bahnlaufrichtung |
| x | Raumrichtung quer zu der Bahnlaufrichtung |
| t | Folientemperatur |
| TG | Temperaturgradienten |

## Patentansprüche

1. Reckwerk (30) zum Längen einer Folienbahn (24) entlang ihrer Längsrichtung (z),
- das (30) mehrere Walzen (22, 23, 31,32, 33, 36, 37) umfasst, über die eine Folienbahn (24) in einer Transportrichtung (z) entlang ihrer Längsrichtung (z) führbar ist,
- und das (30) zumindest einen Reckspalt (21) enthält, der von zumindest zwei Walzen (22, 23, 33, 36) begrenzt wird, die mit unterschiedlicher Umfangsgeschwindigkeit antreibbar sind,
wobei Mittel (40, 41, 42) zum Beaufschlagen der Folienbahn (24) mit einem Temperaturgradienten (TG) vorgesehen sind, der (TG) in der Richtung (x) quer zur Längsachse (z) der Folienbahn verläuft,
**dadurch gekennzeichnet, dass**
stromabwärts der Walzen (22, 23, 31,32, 33, 36, 37) eine Sensorvorrichtung (45) vorgesehen ist, mit welcher die Foliendicke der Folienbahn kontrollierbar ist, wobei eine Steuervorrichtung (47) vorgesehen ist, welcher die Messergebnisse der Sensorvorrichtung (45) über eine Signalleitungen mitteilbar sind, wobei mit der Steuervorrichtung (47) über Signalleitungen Steuerbefehle an die Mittel (40, 41, 42) zum Beaufschlagen der Folienbahn (24) mit einem Temperaturgradienten weitergebbar sind, wobei die Mittel zum Beaufschlagen der Folienbahn (24) mit einem Temperaturgradienten (TG) eines der folgenden Mittel umfassen:
• Infrarotstrahler (42), welche entlang der axialen Richtung (x), die in die Breite der Folienbahn (24) verläuft, segmentiert sind,
• Magnetfelderzeuger, mit welchen in segmentierten Walzen (32) Wirbelströme erzeugbar sind,
• Heizwalzen (3),
• Heißluftdüsen (41), mit welchen Luft unterschiedlicher Temperatur und/oder unterschiedlicher Luftvolumina in der Richtung (x) quer zur Längsachse (z) der Folienbahn einprägbar ist.

2. Reckwerk nach Anspruch 1,
**dadurch gekennzeichnet, dass**
mit der Steuervorrichtung die Folientemperatur in einem Bereich der Folienbreite (x) erhöhbar ist, wenn die Foliendicke einen Sollwert überschreitet.

3. Reckwerk nach einem der vorstehenden Ansprüche,
**dadurch gekennzeichnet, dass**
mit der Steuervorrichtung die Heizleistung in einem Bereich der Folienbreite (x) herabsetzbar oder Steuerbefehle an Kühlelemente erteilbar sind, um die Folientemperatur herabzusetzen.

4. Reckwerk nach einem der vorstehenden Ansprüche,
**dadurch gekennzeichnet, dass**
zumindest Teile der Mittel (40, 41, 42) zum Beaufschlagen der Folienbahn (24) mit einem Temperaturgradienten (TG) in der Transportrichtung (z) der Folienbahn (24) dem zumindest einen Reckspalt (21) vorgelagert sind.

5. Reckwerk nach einem der vorstehenden Ansprüche,
**dadurch gekennzeichnet, dass**
zumindest Teile der Mittel (40, 41, 42) zum Beaufschlagen der Folienbahn (24) mit einem Temperaturgradienten (TG) Bestandteile zumindest einer der Walzen (22, 23, 31,32, 33, 36, 37) sind, über die die Folienbahn (24) führbar ist.

6. Reckwerk nach dem vorstehenden Anspruch,
**dadurch gekennzeichnet, dass**
zumindest Teile der Mittel (40, 41, 42) zum Beaufschlagen der Folienbahn (24) mit einem Temperaturgradienten (TG) Bestandteile zumindest einer der Walzen (22, 23, 31,32, 33, 36, 37) sind, die den Reckspalt (21) begrenzen.

7. Reckwerk nach dem vorstehenden Anspruch,
**dadurch gekennzeichnet, dass**
zumindest Teile der Mittel (40, 41, 42) zum Beaufschlagen der Folienbahn (24) mit einem Temperaturgradienten (TG) Bestandteile zumindest einer der Walzen (22, 23, 33, 36) sind, die den Reckspalt (21) begrenzen und die dem Reckspalt (21) in Transportrichtung (z) der Folie vorgelagert ist.

8. Reckwerk nach einem der vorstehenden Ansprüche,
**dadurch gekennzeichnet, dass**
die Mittel (40, 41, 42) zum Beaufschlagen der Folienbahn (24) mit einem Temperaturgradienten (TG) Walzen (22, 23, 31,32, 33, 36, 37) umfassen, die in ihrer axialen Richtung (x) unterschiedlich temperierbar sind.

9. Reckwerk nach einem der vorstehenden Ansprüche,
**dadurch gekennzeichnet, dass**
die Mittel (40, 41, 42) zum Beaufschlagen der Folienbahn (24) mit einem Temperaturgradienten (TG) Kühlmittel und/oder Heizmittel (40, 41, 42) umfassen.

10. Reckwerk nach einem der vorstehenden Ansprüche,
**dadurch gekennzeichnet, dass**
die Mittel (40, 41, 42) zum Beaufschlagen der Folienbahn (24) mit einem Temperaturgradienten (TG) Kühlmittel umfassen

11. Reckwerk nach einem der vorstehenden Ansprüche,
**gekennzeichnet durch**
zumindest eine Walze (22, 23, 31,32, 33, 36, 37) zum Transport der Folienbahn (24), die mit einer Umfangsfläche ausgestattet ist, deren Haftreibung sich in der axialen Richtung (x) der Walze (22, 23, 31,32, 33, 36, 37) verändert.

12. Verfahren zum Längen einer Folienbahn (24) entlang ihrer Längsrichtung (z),
- bei dem die Folienbahn (24) in einer Transportrichtung (z) über mehrere Walzen (22, 23, 31,32, 33, 36, 37) geführt wird,
- und bei dem die Folienbahn (24) in zumindest einem Reckspalt (21) gelängt wird, der von mindestens zwei Walzen (22, 23, 33, 36) begrenzt wird, die mit unterschiedlicher Umfangsgeschwindigkeit betrieben werden,
wobei die Bahn mit einem Temperaturgradienten (TG) versehen wird, der (TG) in der Richtung (x) quer zur Längsachse (z) der Folienbahn verläuft **dadurch gekennzeichnet, dass**
stromabwärts der Walzen (22, 23, 31,32, 33, 36, 37) mit einer Sensorvorrichtung (45) die Foliendicke der Folienbahn kontrolliert wird, wobei einer Steuervorrichtung (47) die Messergebnisse der Sensorvorrichtung (45) über eine Signalleitungen mitgeteilt werden, wobei die Steuervorrichtung (47) über Signalleitungen Steuerbefehle an die Mittel (40, 41, 42) zum Beaufschlagen der Folienbahn (24) mit einem Temperaturgradienten weitergibt, wobei die Mittel zum Beaufschlagen der Folienbahn (24) mit einem Temperaturgradienten (TG) eines der folgenden Mittel umfassen:
• Infrarotstrahler (42), welche entlang der axialen Richtung (x), die in die Breite der Folienbahn (24) verläuft, segmentiert sind,
• Magnetfelderzeuger, mit welchen in segmentierten Walzen (32) Wirbelströme erzeugbar sind,
• Heizwalzen (3),
• Heißluftdüsen (41), mit welchen Luft unterschiedlicher Temperatur und/oder unterschiedlicher Luftvolumina in der Richtung (x) quer zur Längsachse (z) der Folienbahn einprägbar ist..

13. Verfahren nach dem vorstehenden Anspruch,
**dadurch gekennzeichnet, dass**
die Temperatur (t) in der Richtung (x), die quer zur Längsachse (z) der Folienbahn (24) verläuft, in den Außenbereichen der Folienbahn (26, 27) auf eine höhere Temperatur (t) gebracht wird als in der Bahnmitte.

14. Verfahren nach dem vorstehenden Anspruch,
**dadurch gekennzeichnet, dass**
die Folienbahn (24) in der Richtung (x), die quer zur Längsachse (z) der Folienbahn (24) verläuft, in den Außenbereichen (26, 27) der Folienbahn (24) geheizt und/oder in der Bahnmitte gekühlt wird.

15. Verfahren nach einem der drei vorstehenden Ansprüche,
**dadurch gekennzeichnet, dass**
die Folienbahn (24) durch zumindest einen Walzenspalt (21) geführt wird, in dem auf die Außenbereiche (26, 27) der Folienbahn (24) ein höherer Druck ausgeübt wird als auf die Bahnmitte.

16. Verfahren nach einem der vier vorstehenden Ansprüche,
**dadurch gekennzeichnet, dass**
- die Folienbahn zumindest von einer Walze (22, 23, 31,32, 33, 36, 37) geführt wird,
- welche mit den Außenbereichen (26, 27) der Folienbahn (24) stärker reibt als mit der Bahnmitte.

17. Verfahren nach einem der fünf vorstehenden Ansprüche,
**dadurch gekennzeichnet, dass**
- die Folienbahn (24) zumindest von einer Walze (22, 23, 31,32, 33, 36, 37) geführt wird,
- welche mit einer Umfangsfläche ausgestattet ist, die zumindest einen Randbereich (26, 27) der Folienbahn (24) mit einer größeren Kraft in der axialen Richtung (x) der Walze (22, 23, 31,32, 33, 36, 37) beaufschlagt als den mittleren Bereich der Folienbahn (24).

## Claims

1. A stretching device (30) for elongating a film web (24) along its longitudinal direction (z),
- which stretching device (30) comprises a plurality of rollers (22, 23, 31, 32, 33, 36, 37), by means of which a film web (24) can be guided in a transport direction (z) along its longitudinal direction (z),
- and said stretching device (30) contains at least one stretching gap (21), which is delimited by at least two rollers (22, 23, 33, 36), which can be driven at different peripheral speed,
wherein means (40, 41, 42) are provided for applying a temperature gradient(TG) to the film web (24), which (TG) extends in the direction (x) transverse to the longitudinal axis (z) of the film web,
**characterized in that**
downstream of the rollers (22, 23, 31, 32, 33, 36, 37) a sensordeice (45) is provided, with which the film thickness of the film web can be controlled, wherein a control device (47) is provided, to which the measurement results of the sensor device (45) can be communicated via a signal line, wherein with the control device (47) control commands can be forwarded via signal lines to the means (40, 41, 42) for applying a temperature gradient to the film web (24), wherein the means for applying a temperature gradient(TG) of one of the following meansto the film web (24) comprise:
• infrared emitters (42), which are segmented along the axial direction (x), which extends into the width of the film web (24),
• magneticfield generator, with which eddy currents can be generated in segmented rollers (32),
• heat rollers (3),
• hot air nozzles (41), with which air of different temperature and/or different air volumes can be impressed in the direction (x) transverse to the longitudinal axis (z) of the film web.

2. The stretching device according to claim 1,
**characterized in that**
the film temperature can be increased in an area of the film width (x) by means of the control device, if the film thickness exceeds a target value.

3. The stretching device according to any one of the preceding claim,
**characterized in that**
the heating power can be reduced in an area of the film width (x) by means of the control device or control commands can be imparted to cooling elements, in order to reduce the film temperature.

4. The stretching device according to any one of the preceding claims,
**characterized in that**
at least parts of the means (40, 41, 42) for applying a temperature gradient (TG) to the film web (24) in the transport direction (z) of the film web (24) are upstream of the at least on e stretching gap (21).

5. The stretching device according to any one of the preceding claims,
**characterized in that**
at least parts of the means (40, 41, 42) for applying a temperature gradient (TG) to the film web (24) are components at least of one of the rollers (22, 23, 31.32, 33, 36, 37), via which the film web (24) can be guided.

6. The stretching device according to the preceding claim,
**characterized in that**
at least parts of the means (40, 41, 42) for applying a temperature gradient (TG) to the film web (24) are components at least of one of the rollers (22, 23, 31, 32, 33, 36, 37), which delimit the stretching gap (21).

7. The stretching device according to the preceding claim,
**characterized in that**
at least parts of the means (40, 41, 42) for applying a temperature gradient (TG) to the film web (24) are components at least of one of the rollers (22, 23, 33, 36), which delimit the stretching gap (21) and which is upstream of the stretching gap (21) in the transport direction (z) of the film.

8. The stretching device according to any one of the preceding claims,
**characterized in that**
the means (40, 41, 42) for applying a temperature gradient (TG) to the film web (24) comprise rollers (22, 23, 31, 32, 33, 36, 37), which can be temperature-controlled differently in their axial direction (x).

9. The stretching device according to any one of the preceding claims,
**characterized in that**
the means (40, 41, 42) for applying a temperature gradient (TG) to the film web (24) comprise cooling means and/or heating means (40, 41, 42).

10. The stretching device according to any one of the preceding claims,
**characterized in that**
the means (40, 41, 42) for applying a temperature gradient (TG) to the film web (24) comprise cooling means.

11. The stretching device according to any one of the preceding claims,
**characterized by**
at least one roller (22, 23, 31, 32, 33, 36, 37) for the transport of the film web (24), which is equipped with a circumferential surface, the adhesive friction of which changes in the axial direction (x) of the roller (22, 23, 31, 32, 33, 36, 37).

12. A method for elongating a film web (24) along its longitudinal direction (z),
- in which the film web (24) is guided in a transport direction (z) over a plurality of rollers (22, 23, 31, 32, 33, 36, 37),
- and in which the film web (24) is elongated in at least one stretching gap (21), which is delimited by at least two rollers (22, 23, 33, 36), which are operated at a different circumferential speed,
wherein the web is provided with a temperature gradient (TG), which (TG) extends in the direction (x) transverse to the longitudinal axis (z) of the film web,
**characterized in that**
the film thickness of the film web is controlled downstream of the rollers (22, 23, 31, 32, 33, 36, 37) with a sensordevice (45), wherein measurement results of the sensor device (45) are imparted via a signal line to the control device (47), wherein the control device (47) forwards control commands via signal lines to the means (40, 41, 42) for applying a temperature gradientto the film web (24), wherein the means for applying a temperature gradient (TG) of one the following means to the film web (24) comprise:
• infrared emitters (42), which are segmented along the axial direction (x), which extends into the width of the film web (24),
• magnetic field generators, with which eddy currents can be generated in segmented rollers (32),
• heat rollers (3),
• hot air nozzles (41), with which air of differenttemperature and/ordifferent volumes of air can be impressed in the direction (x) transverse to the longitudinal axis (z) of the film web.

13. The method according to the preceding claim,
**characterized in that**
the temperature (t) in the direction (x), which extends transverse to the longitudinal axis (z) of the filmweb (24), is brought into the outer regions of the film web (26, 27) at a higher temperature (t) than in the middle of the web.

14. The method according to the preceding claim,
**characterized in that**
the film web (24) is heated in the direction (x), which extends transversely to the longitudinal axis (z) of the film web (24), in the outer regions (26, 27) of the film web (24) and/or is cooled in the middle of the web.

15. The method according to any one of the three preceding claims,
**characterized in that**
the film web (24) is guided through at least one roller gap (21), in which a higher pressure is exerted on the outer regions (26, 27) of the film web (24) than on the middle of the web.

16. The method according to any one of the four preceding claims,
**characterized in that**
- the film web is guided at least by one roller (22, 23, 31, 32, 33, 36, 37),
- which rubs more strongly with the outer regions (26, 27) of the film web (24) than with the middle of the web.

17. The method according to any one of the five preceding claims,
**characterized in that**
- the film web (24) is guided at least by one roller (22, 23, 31, 32, 33, 36, 37),
- which is equipped with a circumferential surface, which applies a greater force on at least one edge region (26, 27) of the film web (24) in the axial direction (x) of the rollers (22, 23, 31, 32, 33, 36, 37) than on the middle region of the film web (24).

## Revendications

1. Dispositif d'étirage (30) pour l'allongement d'une bande de film (24) le long de sa direction longitudinale (z),
- qui (30) comprend plusieurs rouleaux (22, 23, 31, 32, 33, 36, 37) par l'intermédiaire desquels une bande de film (24) peut être guidée dans une direction de transport (z) le long de sa direction longitudinale (z),
- et qui (30) comprend au moins un interstice d'étirage (21) qui est délimité par au moins deux rouleaux (22, 23, 33,36), qui peuvent être entraînés avec des vitesses circonférentielles différentes,
dans lequel des moyens (40, 41, 42) pour la sollicitation de la bande de film (24) avec un gradient de température (TG), qui (TG) s'étend dans la direction (x) transversale par rapport à l'axe longitudinal (z) de la bande de film,
**caractérisé en ce que**
en aval des rouleaux (22, 23, 31, 32, 33, 36, 37) est prévu un dispositif de capteur (45) avec lequel l'épaisseur du film de la bande de film peut être contrôlée, dans lequel un dispositif de commande (47) est prévu, avec lequel les résultats de mesure du dispositif de capteur (45) peuvent être envoyés par l'intermédiaire d'une conduite de signalisation, dans lequel, avec le dispositif de commande (47), par l'intermédiaire de conduites de signalisation, des instructions de commande peuvent être transmises aux moyens (40, 41,42) de sollicitation de la bande de film (24) avec un gradient de température, dans lequel les moyens de sollicitation de la bande de film (24) avec un gradient de température (TG) comprennent un des moyens suivants :
• émetteurs infrarouges (42) qui sont segmentés le long de la direction axiale (x), qui s'étend dans la largeur de la bande de film (24),
• générateurs de champ magnétique, avec lesquels des courants de Foucault peuvent être générés dans des rouleaux segmentés (32),
• rouleaux chauffants (3),
• buses à air chaud (41) avec lesquelles de l'air à différentes températures et/ou avec différents volumes peut être introduit dans la direction (x) transversale par rapport à l'axe longitudinal (z) de la bande de film.

2. Dispositif d'étirage selon la revendication 1,
**caractérisé en ce que**
avec le dispositif de commande, la température du film peut être augmentée dans une zone de la largeur du film (x) lorsque l'épaisseur du film dépasse une valeur de consigne.

3. Dispositif d'étirage selon l'une des revendications précédentes,
**caractérisé en ce que**
avec le dispositif de commande, la puissance de chauffage peut être diminuée dans une zone de la largeur du film (x) ou des instructions de commande peuvent être fournies à des éléments de refroidissement afin de diminuer la température du film.

4. Dispositif d'étirage selon l'une des revendications précédentes,
**caractérisé en ce que**
au moins des parties des moyens (40, 41, 42) de sollicitation de la bande de film (24) avec un gradient de température (TG) dans la direction de transport (z) de la bande de film (24) sont disposées en amont de l'au moins un interstice d'étirage (21).

5. Dispositif d'étirage selon l'une des revendications précédentes,
**caractérisé en ce que**
au moins des parties des moyens (40, 41, 42) de sollicitation de la bande de film (24) avec un gradient de température (TG) sont des composants d'au moins un des rouleaux (22, 23, 31, 32, 33, 36, 37), par l'intermédiaire desquels la bande de film (24) peut être guidée.

6. Dispositif d'étirage selon la revendication précédente,
**caractérisé en ce que**
au moins des parties des moyens (40, 41, 42) de sollicitation de la bande de film (24) avec un gradient de température (TG) sont des composants d'au moins un des rouleaux (22, 23, 31, 32, 33, 36, 37) qui délimitent l'interstice d'étirage (21).

7. Dispositif d'étirage selon la revendication précédente,
**caractérisé en ce que**
au moins des parties des moyens (40, 41, 42) de sollicitation de la bande de film (24) avec un gradient de température (TG) sont des composants d'au moins un des rouleaux (22, 23, 33, 36) qui délimitent l'interstice d'étirage (21) et qui sont disposés en amont de l'interstice d'étirage (21) dans la direction de transport (z) du film.

8. Dispositif d'étirage selon l'une des revendications précédentes,
**caractérisé en ce que**
les moyens (40, 41, 42) de sollicitation de la bande de film (24) avec un gradient de température (TG) comprennent des rouleaux (22, 23, 31, 32, 33, 36, 37) qui peuvent être régulés en température de manière variable dans leur direction axiale (x).

9. Dispositif d'étirage selon l'une des revendications précédentes,
**caractérisé en ce que**
les moyens (40,41,42) de sollicitation de la bande de film (24) avec un gradient de température (TG) comprennent des moyens de refroidissement et/ou des moyens de chauffage (40, 41, 42).

10. Dispositif d'étirage selon l'une des revendications précédentes,
**caractérisé en ce que**
les moyens (40, 41, 42) de sollicitation de la bande de film (24) avec un gradient de température (TG) comprennent des moyens de refroidissement.

11. Dispositif d'étirage selon l'une des revendications précédentes,
**caractérisé par**
au moins un rouleau (22, 23, 31, 32, 33, 36, 37) pour le transport de la bande de film (24), qui est muni d'une surface circonférentielle dont la friction par adhérence varie dans la direction axiale (x) du rouleau (22, 23, 31, 32, 33, 36, 37).

12. Procédé d'allongement d'une bande de film (24) le long de sa direction longitudinale (z),
- dans lequel la bande de film (24) est guidée dans une direction de transport (z) par l'intermédiaire de plusieurs rouleaux (22, 23, 31, 32, 33, 36, 37),
- et dans lequel la bande de film (24) est allongée dans au moins un interstice d'étirage (21) qui est délimité par au moins deux rouleaux (22, 23, 33, 36) qui sont entraînées à des vitesses circonférentielles différentes,
dans lequel la bande est muni d'un gradient de température (TG), qui (TG) s'étend dans la direction (x) transversale par rapport à l'axe longitudinal (z) de la bande de film,
**caractérisé en ce que**
en aval des rouleaux (22, 23, 31, 32, 33, 36, 37), l'épaisseur de film de la bande de film est contrôlée avec un dispositif de capteur (45), dans lequel les résultats de mesure du dispositif de capteur (45) sont envoyés à un dispositif de commande (47) par l'intermédiaire d'une conduite de signalisation, dans lequel le dispositif de commande (47) transmet, par l'intermédiaire de conduites de signalisation, des instructions de commande aux moyens (40, 41, 42) de sollicitation de la bande de film (24) avec un gradient de température, dans lequel les moyens de sollicitation de la bande de film (24) avec un gradient de température (TG) comprend un des moyens suivants :
• émetteurs infrarouges (42) qui sont segmentés le long de la direction axiale (x), qui s'étend dans la largeur de la bande de film (24),
• générateurs de champ magnétique, avec lesquels des courants de Foucault peuvent être générés dans des rouleaux segmentés (32),
• rouleaux chauffants (3),
• buses à air chaud (41) avec lesquelles de l'air à différentes températures et/ou avec différents volumes peut être introduit dans la direction (x) transversale par rapport à l'axe longitudinal (z) de la bande de film.

13. Procédé selon la revendication précédente,
**caractérisé en ce que**
la température (t) dans la direction (x), qui s'étend transversalement par rapport à l'axe longitudinal (z) de la bande de film (24), est amenée, dans les parties externes de la bande de film (26, 27), à une température (t) plus grande qu'au centre de la bande.

14. Procédé selon la revendication précédente,
**caractérisé en ce que**
la bande de film (24) est chauffée dans les parties extérieures (26, 27) de la bande de film (24) et/ou refroidie au centre de la bande dans la direction (x), qui s'étend transversalement par rapport à l'axe longitudinal (z) de la bande de film (24).

15. Procédé selon l'une des trois revendications précédentes,
**caractérisé en ce que**
la bande de film (24) est guidée à travers au moins un interstice de rouleaux (21) dans lequel, sur les parties extérieures (26, 27) de la bande de film (24), une pression plus grande qu'au centre de bande est appliquée.

16. Procédé selon l'une des quatre revendications précédentes,
**caractérisé en ce que**
- la bande de film est guidée par au moins un rouleau (22, 23, 31, 32, 33, 36, 37),
- qui frotte plus fortement avec les parties extérieures (26, 27) de la bande de film (24) qu'avec le centre de la bande.

17. Procédé selon l'une des cinq revendications précédentes,
**caractérisé en ce que**
- la bande de film (24) est guidée par au moins un rouleau (22, 23, 31, 32, 33, 36, 37),
- qui est muni d'une surface circonférentielle qui sollicite au moins une partie de bord (26, 27) de la bande de film (24) avec une force dans la direction axiale (x) du rouleau (22, 23, 31, 32,33, 36, 37), plus grande que dans la partie centrale de la bande de film (24).
